# EUROPEAN PATENT SPECIFICATION

(11) **EP 2 437 543 B1**
(45) Date of publication and mention of the grant of the patent: **12.08.2015**
(21) Application number: 10012865.1
(22) Date of filing: 01.10.2010
(51) Int. Cl.: H04W 36/00, H04W 76/06

(54) **Local circuit switched fallback cancellation mechanism**
Lokaler leistungsvermittelter Rückfallunterdrückungsmechanismus
Mécanisme d'annulation de rechange commutée à circuit local

(43) Date of publication of application: 04.04.2012
(73) Proprietor: Vodafone GmbH, 40549 Düsseldorf (DE)
(72) Inventor: Pudney, Christopher, Penwood, Newbury RG20 9EZ (GB); Lu, Yang, 40489 Düsseldorf (DE); Dawes, Peter, Swindon, SN1 5JU (GB)
(74) Representative: Müller & Schubert

(56) References cited:
- US-A1- 2010 172 301
- VODAFONE: "MO-CSFB call cancellation", 3GPP DRAFT; C1-102974-DISC-CSFB-CANCELLATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Xian; 20100823, 15 August 2010 (2010-08-15), XP050443760, [retrieved on 2010-08-15]
- "3rd Generation Partnership Project; Technical Specification Group Services and System Aspects; Circuit Switched (CS) fallback in Evolved Packet System (EPS); Stage 2 (Release 10)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 29 September 2010 (2010-09-29), pages 1-78, XP050442328, [retrieved on 2010-09-29]
- INTERDIGITAL LLC ET AL: "Introduction of EMM SERVICE ABORT message", 3GPP DRAFT; C1-101431, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Kyoto; 20100510, 17 May 2010 (2010-05-17), XP050409356, [retrieved on 2010-05-17]
- INTERDIGITAL LLC: "Cancelling a MO CSFB Request", 3GPP DRAFT; C1-101430, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Kyoto; 20100510, 17 May 2010 (2010-05-17), XP050409355, [retrieved on 2010-05-17]

## Description

The present invention relates to a method of cancelling a Circuit Switched Fallback (CSFB) procedure for a user equipment, wherein a first message for initiating a CSFB procedure is sent from the user equipment to a source network and the cancellation of the CSFB procedure is performed after the first message for initiating the CSFB procedure has been sent according to the preamble of independent claim 1. Furthermore, the present invention relates to a method of cancelling a Circuit Switched Fallback (CSFB) procedure for a user equipment wherein a first message for initiating a CSFB procedure is sent from the user equipment to a source network, wherein a reply message for redirecting the source network to a target network from the source network is received by the user equipment and wherein the cancellation of the CSFB procedure is performed after the reply message for performing the CSFB procedure has been received by the user equipment according to the preamble of independent claim 4.

Today mobile telecommunication is omnipresent in daily life and the need for high speed data transfer increases because video streaming on a mobile device is desired by the users for example. The data transfer speed of the nowadays used and known standards for mobile communications is limited and no longer sufficient. For increasing the data transfer speed, new telecommunication standards are required. One project for standardizing telecommunication standards is the 3rd Generation Partnership Project (3GPP) which works on developing several telecommunication standards. One new installed telecommunication standard for wireless communication with high speed data transfer developed by the 3GPP is for example the evolved UMTS Terrestrial Radio Access Network (E-UTRAN), which is also known as Long Term Evolution (LTE).

In contrast to the known standards like Global System for Mobile Communications EDGE Radio Access Network (GERAN), which is also known as 2G, or UMTS Terrestrial Radio Access Network (UTRAN), which is also known as 3G, E-UTRAN is characterised by a higher data transfer speed, so that video streaming on a mobile device becomes possible.

The developed E-UTRAN standard is an internet protocol (IP) based network standard, so that Circuit Switched (CS) data transmission, known from the GERAN or UTRAN standards, is not possible. Without CS, a data transmission communication services like direct telecommunication between two participants or short message services (SMS) is not possible. To provide such services in E-UTRAN, a new method, called Circuit Switched Fallback (CSFB) has been developed. With this service a fallback from E-UTRAN to GERAN or UTRAN is possible for providing talks or speech between two communication participants and for providing SMS. Information concerning CSFB function for combined LTE and 3G Circuit Switched Services are generally known in prior art.

Related to this technical specification a method and an apparatus for cancelling a CSFB is described in the US 2010/0172301 A1. There, after transmitting a message to initiate a CSFB, the network is triggered to initiate a CSFB. When cancelling the desired CS connection development a message is transmitted to the network, especially a Mobility Management Entity (MME), indicating a request to cancel the CSFB. So the mobile device informs the network about the cancellation by sending a so called "second message" after initiating CSFB and getting cancellation indication from the user.

Document "MO-CSFB call cancellation" (3GPP TSG CT WG1 Meeting #66, Xi'an (R.P. China), 23-27 August 2010) describes that due to cancellation of an MO-CSFB call, a mobile station can locally abort the MO-CSFB call using a number of rules.

It is the object of the present invention to avoid disadvantages in the prior art and particularly to provide a local, particularly mobile originated, solution for cancelling the completion of a CSFB procedure, which allows an efficient cancellation without wasting resources in the network.

In accordance with the present invention, this object is solved by the methods with the features according to independent claims 1 and 4.

Additional features and details of the present invention become apparent from the dependent claims, from the description and from the drawing. Features and details described in connection with the method according to the first aspect of the invention are, of course, also valid in connection with the method according to the second aspect of the invention, and vice versa. Thus, in respect of the disclosure of one of the aspects of the present invention, full reference is always made reciprocally to the disclosure of each other aspect of the present invention.

Pursuant to a first aspect of the present invention a method of cancelling a Circuit Switched Fallback (CSFB) procedure, for example from a source network to a target network, for a user equipment wherein a first message for initiating a CSFB procedure is sent from the user equipment to a source network and wherein the cancellation of the CSFB procedure is performed after the first message for initiating the CSFB procedure has been sent, is provided.

The method is originated by the user equipment, and after the cancellation of the CSFB procedure has been initiated, the user equipment sends a second message to the source network by means of a Tracking Area Updating procedure, said second message comprising a new cause value said cause value characterising the cancellation of the CSFB procedure.

CSFB is performed in at least one network. In a network various kinds of information are transferred. Preferably, the CSFB is performed from a source network to a target network. For example, the source network is the network where the CSFB procedure starts. The target network can be the network to where the CSFB should be performed. Generally spoken, a CSFB is started in a first network, the source network, and ends in a second network, the target network. The present invention is not limited to any kind of networks. Preferably the source network and/or the target network are a core network.

The source network can be the E-UTRAN in a preferred embodiment which is well known in prior art. E-UTRAN is also known as LTE or high Speed OFDM Packet Access (HSOPA) or Super 3G.

The target network can be GERAN or UTRAN in a preferred embodiment. GERAN is also known in prior art as 2G. UTRAN is also known as 3G. Both networks are well known in prior art.

A network is used to transmit data from one user equipment to another user equipment. User equipment according to the present invention can be every kind of user equipment or device. User equipment for the use in the network can be for example a wireless transmit/receive unit, like a mobile phone, a personal digital assistant (PDA), a notebook, a laptop, a netbook, a sub-notebook, a cellular telephone, a computer or any type of device capable of operating in a network. The present invention is not limited to any kind of user equipment.

A message is particularly a kind of vessel which provides information. The information can be any kind of information like letters, alphabetic characters, numbers, words and any combination thereof. The present invention is not limited to a specific kind of information. Thus, a message should always have an addressee, a recipient and information which should be sent or transported from the addressee to the recipient. According to the present invention several messages can be sent. There can be a kind of message exchange. The present invention is not limited to specific kinds of messages.

Relating to the present invention, by sending a message for initiating a CSFB procedure, a CSFB procedure should be initiated. In contrast, with a cancellation of the CSFB procedure the CSFB procedure should be cancelled and/or stopped. The cancellation should be performed in a way which will be described in detail below. The target of cancellation the CSFB procedure is that the CSFB is not performed in total or completely. A cancellation of the CSFB procedure can only be performed after a CSFB procedure has been initialised before. It is not necessary that the initialisation of the CSFB procedure is completed. It is possible that the initialisation of the CSFB procedure is still in progress; also possible is that the initialisation of the CSFB procedure is already finished. The present invention is not limited to any kind of initialisation steps or stages of the CSFB initialisation procedure.

Relating to the present invention sending is particularly understood in a way, that for example a message, which can be developed or written manually or automatically, is sent from a source to a target, whereas the source and the target can change according to the present circumstances. It is not necessary that the source for sending a message is located in the source network. It is also not necessary that the target whereto the message should be sent is located in the target network. The source and/or the target can be preferably an user equipment and/or an eNodeB and/or a MME according to the abovementioned aspect. The message is sent from a source and reaches or is delivered to the target, to which the message is addressed to.

According to the present invention the sent second message comprises a new cause value, which can be any kind of value, characterising the cancellation of the CSFB procedure. With a new cause value a defined procedure can be triggered. A procedure triggered by a new cause value can be for example cancellation of the CSFB procedure and/or sending and/or displaying a message to a user like "CSFB locally aborted by user". A cause value represents a value due to a defined and/or specific procedure is performed and/or message is sent and/or displayed. The present invention is not limited to specific kinds of cause values and/or defined procedures.

According to one preferred embodiment of the present invention, the source network comprises a Mobility Management Entity (MME). It is possible that the second message which comprises the new cause value is sent to the MME. A MME is the key control-node for the E-UTRAN. The MME is one of the major functions of a telecommunication network that allows mobile devices to work. One aim of the MME is to track where the subscribers are, allowing calls, SMS and other mobile phone services to be delivered to them. It is also responsible for idle mode user equipment tracking and paging procedure including retransmissions. It is involved for example in the bearer activation/deactivation process. It is responsible for authenticating the user. The MME also provides the control plane function for mobility between E-UTRAN and 2G/3G access.

According to another preferred embodiment of the present invention, the source network comprises an eNodeB. It is possible that the second message comprising the new cause value is sent to the eNodeB. As in all cellular systems, the eNodeB contains radio frequency transmitter(s) and the receiver(s) used to communicate directly with mobile devices, which move freely around it. In this type of cellular network, the mobile devices cannot communicate directly with each other but have to communicate with the eNodeB. The present invention is not limited to specific kinds of eNodeB. Also used are NodeB, which is a term used in UMTS and is equivalent to the BTS (base transceiver station) description used in GSM. It is the hardware that is connected to the mobile phone network that communicates directly with mobile handsets. In contrast with GSM base stations, NodeB uses WCDMA/TD-SCDMA.

According to the present invention, the second message comprising the new cause value is sent from the user equipment to the source network by means of performing a Tracking Area Updating procedure. A Tracking Area Update is used in E-UTRAN and is similar to the Location Update used in GERAN and/or UTRAN. The network is divided in several Tracking Areas which can comprise several eNodeBs. If a user equipment is located in one Tracking Area and moves in this Tracking Area the user equipment may be supported by one or more different eNodeBs. This can be performed without a Tracking Area Updating procedure. A Tracking Area Updating procedure is performed by the user equipment if the user equipment changes from one Tracking Area into another Tracking Area. While the user equipment leaves a first Tracking Area and enters another, for example a second Tracking Area the user equipment actively requests or performs a Tracking Area Update for informing the MME about the location of the user equipment. The location is preferably the geographical location of the user equipment. The new location of the user equipment is usually stored in the MME, so that the network has access to the new location information. The present invention is not limited to specific types of Tracking Area Updating procedures and/or in which way they are performed.

According to a second aspect, the present invention relates to a method of cancelling a Circuit Switched Fallback (CSFB) procedure, for example from a source network to a target network, for a user equipment, wherein a first message for initiating a CSFB procedure is sent from the user equipment to a source network, and a reply message for redirecting the source network to a target network is received by the user equipment, for example from the source network, and the cancellation of the CSFB procedure is performed after the reply message for performing the CSFB procedure has been received by the user equipment, and wherein, after the cancellation of the CSFB procedure has been initiated, the user equipment prevents the redirection from the source network to the target network.

The method is originated by the user equipment, and after the cancellation of the CSFB procedure has been initiated the user equipment suppresses the transmission of a notification of cancellation from the user equipment to the source network.

The source network can be the E-UTRAN in a preferred embodiment which is well known in prior art. E-UTRAN is also known as LTE or high Speed OFDM Packet Access (HSOPA) or Super 3G.

The target network can be GERAN or UTRAN in a preferred embodiment. GERAN is also known in prior art as 2G. UTRAN is also known as 3G. Both networks are well known in prior art.

In respect of the disclosure of this aspect of the present invention, full reference is made to the disclosure and the description of the first aspect of the present invention and the abovementioned description. In contrast to the first aspect of the invention a reply message for redirecting the source network to the target network is sent. Particularly a reply message is a message according the abovementioned description. Preferably a reply message can be a Non Access Stratum Protocol Data Unit (NAS PDU) according the technical specifications of the 3GPP. A reply message can preferably also be an Extended Service Request (ESR) according to the technical specifications of the 3GPP. The present invention is not limited to specific kinds of reply messages.

Such a reply message is sent from the target network to the source network after the message for initialising the CSFB procedure is received by the network. In particular, the target network is the network comprising at least one eNodeB and/or the MME. So the reply message could be sent by at least one eNodeB and/or the MME. It is also possible that the reply message is sent by the MME via at least one eNodeB.

The user equipment receives or retrieves the message for redirecting the source network to the target network and the cancellation of the CSFB procedure is performed after the reply message is received or retrieved, but the user equipment does not perform the redirection from the source network to the target network.

Preferably the user equipment receives the message for redirecting but ignores it. The user equipment prevents the redirection from the source network to the target network.

Preferably the reply message can be a "RRC connection release with redirection" message according the technical specifications of 3GPP.

Redirection in connection with the present invention is particularly understood in way that a redirection from the source network to the target network is performed. Preferably after initialising a CSFB, a CSFB should be performed according the technical specifications of 3GPP; a Fallback from E-UTRAN to GERAN or UTRAN. The redirection should be performed until the CSFB procedure is cancelled. The CSFB procedure can be cancelled by the user through the user equipment for example.

According to the present invention, after the cancellation of the CSFB procedure has been initiated, the user equipment suppresses the transmission of a notification of cancellation from the user equipment to the source network.

Preferably after the user equipment received the reply message according to the abovementioned description, the user equipment does not inform the network about the cancellation, when getting a cancellation indication of the CSFB procedure from the user. So the user equipment acts only locally without any peer-to-peer signalling. The network is not informed about the cancellation of the CSFB procedure through the user equipment or by any other involved component.

According to another preferred embodiment of the present invention, the reply message as a "RRC connection release with redirection" message from the source network is received by the user equipment, the user equipment releases the RCC connection and the user equipment prevents the performance of the redirection from the source network to the target network.

The "RRC connection release with redirection" message can be designed and/or connected with the technical specifications of the 3GPP. The user equipment receives the "RRC connection release with redirection" message and prevents the redirection from the source network to the target network, so a CSFB is not performed even if the CSFB could be performed, because the CSFB procedure is cancelled and the network is not informed about the cancellation because the user equipment suppresses the transmission of a notification of cancellation from the user equipment to the network.

According to another preferred embodiment of the present invention, the method is characterised in that as a reply message for redirecting from the source network to the target network is received by the user equipment, a Handover command is received by the user equipment and the cancellation of the CSFB procedure is performed after the Handover command has been received by the user equipment.

The present invention is not limited to specific types of message. Preferably the reply message for redirecting the source network to the target network can be a "RRC connection release with redirection" message.

In particular, a Handover refers to the process of transferring an ongoing call or data session from one channel connected to the network to another. During an ongoing process, which could be a call or a data session the user equipment leaves one cell and enters another cell. For an interruption free process a Handover is required.

According to another preferred embodiment of the present invention, for cancellation of the CSFB procedure a second message is sent from the user equipment to the source network, and said second message comprising a new cause value said cause value characterising the cancellation of the CSFB procedure. This cause value is already described in detail above and it is referred to the abovementioned description.

According to another preferred embodiment of the present invention, a second message a "RRC Connection Reestablishment Request" message is sent from the user equipment to the source network, said "RRC Connection Reestablishment Request" message comprising a new cause value said cause value characterising the cancellation of the CSFB procedure.

The "RRC Connection Reestablishment Request" message can be any kind of message, preferably the "RRC Connection Reestablishment Request" message is a message according the corresponding technical specification of 3GPP.

According to another preferred embodiment of the present invention, the source network comprises an eNodeB, that for cancellation of the CSFB procedure the user equipment transmits the second message to the eNodeB, and that the second message triggers the eNodeB for sending a message characterising the cancellation of the CSFB procedure to the target network.

To trigger in connection with the invention can be understood in a way, that the eNodeB is particularly activated or is particularly commanded for sending a message. This message characterising the cancellation of the CSFB procedure can be any kind of message for cancellation of the CSFB procedure, like a Handover and/or a general and/or specific failure message and/or an "aborted by user message" message.

According to the first and second aspect of the present invention, the methods are originated by the user equipment, for example mobile originated.

In comparison to the present invention, the disadvantage of the solution according to US 2010/0172301 A1 is that it is only workable for the case in which the second message is sent before the mobile device receives a message from the network responding to the first message. It is noteworthy to point out that the time window between the sending the first message and receiving the response message is very small ranging from two to five hundreds milliseconds as shown in field under normal conditions. The present invention provides a local, particularly a mobile originated, solution to cancel the completion of the CSFB procedure.

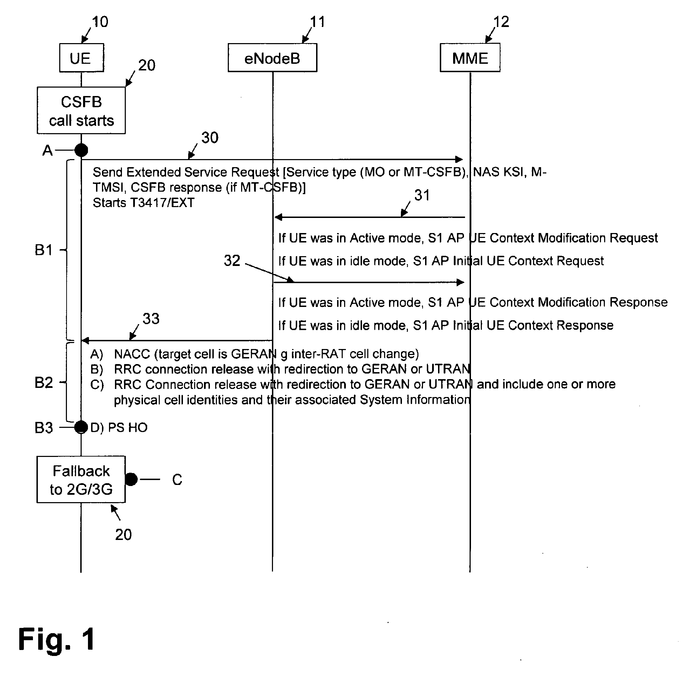

For a better understanding of the present invention of a method of cancelling a Circuit Switched Fallback procedure from a source network to a target network for a user equipment will now be described by way of example, with reference to the accompanying drawing which schematically shows the method of the present invention. Shown is in
Figure 1 a schematic view of a method of cancelling a CSFB procedure from a source network to a target network for a user equipment.

In Figure 1 a schematic view of a method of cancelling a CSFB procedure from a source network to a target network for a user equipment is shown.

The user of a user equipment 10 wants to make a conventional telephone call. Usually the user of the user equipment 10 uses E-UTRAN for high speed data transfer, for example video streaming. For realising a conventional telephone call a so called Circuit Switched Fallback (CSFB) has to be performed because in the E-UTRAN communication standard a circuit switched data transfer, like a direct connection between two user equipments is not possible.

For realising a circuit switched connection between two user equipments 10, the initiating user equipment 10 sends a message 30 to the MME 12 for initialising a CSFB 20. This message 30 is conventionally an Extended Service Request (CS Fallback Indicator) according to the technical specifications of 3GPP. The message 30 can also be a request message or an initialisation message. The Extended Service Request message is encapsulated in RRC and S1 AP messages. CSFB Indicator indicates MME 12 to perform a CSFB. The user equipment 10 only transmits this request if it is attached to CS domain (with a combined EPS/IMSI Attach) and cannot initiate an IMS voice session (because for example the user equipment is not IMS registered or IMS voice services are not supported by the serving IP CAN, home PLMN or UE). So the request for initialising a CSFB 20 is send and the network would perform a CSFB in the further progress. The CSFB is not yet performed completely.

Several scenarios are possible for cancelling the CSFB procedure, which will be described in detail according to Figure 1.

The cancellation can be performed before the message 30 for initialisation a CSFB is sent from the user equipment 10 to the network or to the MME 12. This corresponds to point A in Figure 1. In this case the procedure of initialisation a CSFB 20 is just cancelled without sending the message 30 for initialisation a CSFB 20.

If the message 30 for initialisation a CSFB 20 is already sent by the user equipment 10 to the MME 12, the MME 12 sends a message 31 to the eNodeB 11. This message 31 is conventionally a S1 AP UE Context Modification Request message that includes a CS Fallback indicator. This message 31 indicates to the eNodeB 11 that the user equipment 10 should be moved to UTRAN or GERAN. The message 31 is preferably a message according the technical specifications of 3GPP.

In the following the eNodeB 11 sends a reply message 32 to the MME 12. Preferably the eNodeB 11 shall reply with S1-AP UE Context Modification Response message 32 according to the technical specifications of the 3GPP. Optionally the eNodeB 11 can solicit a message 33 to the user equipment 10. This message can be a measurement report from the user equipment 11 to determine the target GERAN/UTRAN cell to which packet switched Handover will be performed. The time period from sending the message 30 from the user equipment 10 to the MME 12 until receiving the message 33 by the eNodeB 11 from the user equipment 10 corresponds to the time period B1 in Figure 1. In the time period B1 the message 33 is not yet send from the eNodeB 11 to the user equipment 10. In time period B1, if the message 33 is not yet received and the CSFB is cancelled the "RRC connection release requested by upper layers" procedure according the technical specification 36.331 of 3GPP is triggered.

If the CSFB procedure is not cancelled in time period B1 and the user equipment 10 receives the message 33 of the eNodeB 11, the CSFB initialisation procedure is still ongoing. The message 33 is also called a "RRC connection release with redirection" message. The time period between receiving message 33 by the user equipment 10 and the packet switched (PS) Handover (HO) corresponds to the time period B2 in Figure 1. If the cancellation of the CSFB initialisation 20 is performed in time period B2 the user equipment 10 releases the RRC connection, but without performing the redirection. The user equipment 10 receives the permission or the command for performing a CSFB but the user equipment 10 received in the meanwhile the cancellation of the CSFB. So the user equipment 10 does not send an additional message back to the network; to the eNodeB 11 and/or to the MME 12; to inform the network about the CSFB cancellation. The user equipment 10 receives the command for initialisation a CSFB 20 from the network and the cancellation of the CSFB from the user. In this time period the user equipment 10 ignores the command of the network for initialising the CSFB 20 but does not send a reply message about the cancellation of the CSFB. The network, neither the eNodeB 11 nor the MME 12 is informed about the cancellation of the CSFB. This results in a reduction of traffic in the communication network and reduces for example energy costs for the provider.

If the cancellation of the CSFB is not received by the user equipment 10 in time period B2, the process of initialisation the CSFB 20 is still ongoing and the user equipment 10 receives in the following initialisation process a Handover command, which informs the user equipment 10 to perform a Handover. The time step of receiving the Handover command corresponds to B3 in Figure 1. If the cancellation of the CSFB is received at time step B3, a message is send to the user. This message can be a "RRC Connection Reestablishment Request" message according to the technical specifications 36.331 of 3GPP. Additionally this message can include a new cause value. This message can also include a text like Handover failure. The content of the message is shown to the user of the user equipment 10. The new cause value can be "translated" into a message like "CSFB locally aborted by user". Translate is understood in a way that the value of the new cause value results in a predefined text message which will be send and/or displayed to the user.

Additionally it could be possible that during the time periods and/or time steps B1, B2 and B3 the network is informed when the user equipment 10 receives a cancellation of the CSFB. So, after sending message 30 from the user equipment 10 to the MME 12 and a cancellation of the CSFB is received by the user equipment 10, the user equipment 10 can inform the network, which can consist of the eNodeB 11 and the MME 12, by means of performing a Tracking Area Updating procedure with a new cause value. This could be possible for the time periods and time steps B1, B2 and B3.

If the cancellation of the CSFB is received by the user equipment 10 after the CSFB is performed 21, which corresponds to time step C in Figure 1, the user equipment 10 follows the rules specified in the technical specifications 24.008 of 3GPP.

### List of Reference Numerals

- 10: User equipment
- 11: eNodeB
- 12: Mobility Management Entity

- 20: CSFB call starts
- 21: Fallback to 2G/3G

- 30: Message
- 31: Message
- 32: Message
- 33: Message

- A: Time step of cancellation
- B1: Time period of cancellation
- B2: Time period of cancellation
- B3: Time step of cancellation
- C: Time step of cancellation

## Claims

1. A method of cancelling a Circuit Switched Fallback, CSFB, procedure for a user equipment (10) wherein a first message (30) for initiating a CSFB procedure is sent from the user equipment (10) to a source network and wherein the cancellation of the CSFB procedure is performed after the first message for initiating the CSFB procedure has been sent, the method being originated by the user equipment (10), and the method being **characterized in that** after the cancellation of the CSFB procedure has been initiated, the user equipment (10) sends a second message to the source network by means of performing a Tracking Area Updating procedure, said second message comprising a new cause value said new cause value characterising the cancellation of the CSFB procedure.

2. The method according to claim 1, wherein the source network comprises a Mobility Management Entity, MME, (12) and that the second message is sent to said MME (12).

3. The method according to anyone of claims 1 or 2, wherein the source network comprises an eNodeB (11) and that the second message is sent to said eNodeB (11).

4. A method of cancelling a Circuit Switched Fallback, CSFB, procedure for a user equipment (10), wherein a first message (30) for initiating a CSFB procedure is sent from the user equipment (10) to a source network, wherein a reply message (33) for redirecting the source network to a target network, particularly a "RRC connection release with redirection" message, is received by the user equipment (10) and wherein the cancellation of the CSFB procedure is performed after the reply message for performing the CSFB procedure has been received by the user equipment and wherein after the cancellation of the CSFB procedure has been initiated the user equipment prevents the redirection from the source network to the target network, the method being originated by the user equipment (10), and the method being **characterized in that** after the cancellation of the CSFB procedure has been initiated the user equipment (10) suppresses the transmission of a notification of cancellation from the user equipment (10) to the source network.

5. The method according to claim 4, wherein as a reply message (33) a "RRC connection release with redirection" message from the source network is received by the user equipment (10), that the user equipment (10) releases the RCC connection and that the user equipment (10) prevents the performance of the redirection from the source network to the target network.

6. The method according to claim 4 or 5, wherein after a reply message (33) for redirecting the source network to the target network, particularly a "RRC connection release with redirection" message, from the source network is received by the user equipment (10), a Handover command is received by the user equipment and that the cancellation of the CSFB procedure is performed after the Handover command has been received by the user equipment (10).

7. The method according to anyone of claims 4 to 6, wherein for cancellation of the CSFB procedure a second message is sent from the user equipment (10) to the source network, said second message comprising a new cause value said cause value characterising the cancellation of the CSFB procedure.

8. The method according to claim 7, wherein as a second message a "RRC Connection Reestablishment Request" message is sent from the user equipment (10) to the source network, said "RRC Connection Reestablishment Request" message comprising a new cause value said cause value characterising the cancellation of the CSFB procedure.

9. The method according to claim 7 or 8, wherein the source network comprises an eNodeB, that for cancellation of the CSFB procedure the user equipment (10) transmits the second message to the eNodeB, and that the second message triggers the eNodeB for sending a message characterising the cancellation of the CSFB procedure to the target network.

10. The method according to anyone of claims 1 to 9, wherein the method is adapted of cancelling a Circuit Switched Fallback, CSFB, procedure from a source network to a target network.

11. The method according to anyone of claims 1 to 10, wherein the method is adapted of cancelling a Circuit Switched Fallback, CSFB, procedure from E-UTRAN to GERAN or UTRAN.

## Patentansprüche

1. Verfahren zum Aufheben einer Circuit-Switched-Fallback, CSFB, Prozedur für eine Nutzereinrichtung (10), bei dem ein erste Nachricht (30) zum Initiieren einer CSFB Prozedur von der Nutzereinrichtung (10) zu einem Quellnetz geschickt wird und bei dem die Aufhebung der CSFB Prozedur durchgeführt wird, nachdem die erste Nachricht zum Initiieren der CSFB Prozedur abgeschickt worden ist, wobei das Verfahren durch die Nutzereinrichtung (10) erzeugt wird und wobei das Verfahren **dadurch gekennzeichnet ist, dass**, nachdem die Aufhebung der CSFB Prozedur initiiert worden ist, die Nutzereinrichtung (10) eine zweite Nachricht mittels Durchführung einer Tracking-Area-Update Prozedur an das Quellnetz sendet, wobei die zweite Nachricht einen neuen Ursache-Wert aufweist, wobei der neue Ursache-Wert die Aufhebung der CSFB Prozedur charakterisiert.

2. Das Verfahren nach Anspruch 1, bei dem das Quellnetz eine Mobilitäts-Management-Einheit, (MME), (12) aufweist, und dass die zweite Nachricht an die MME (12) geschickt wird.

3. Das Verfahren nach Anspruch 1 oder 2, bei dem das Quellnetz einen eNodeB (11) aufweist und dass die zweite Nachricht an den eNodeB (11) geschickt wird.

4. Ein Verfahren zum Aufheben einer Circuit-Switched-Fallback, CSFB, Prozedur für eine Nutzereinrichtung (12), bei dem eine erste Nachricht (30) zum Initiieren einer CSFB Prozedur von der Nutzereinrichtung (10) an ein Quellnetz geschickt wird, bei dem eine Antwortnachricht (30) zum Umleiten des Quellnetzes an ein Zielnetz, insbesondere eine "RRC Verbindungsfreigabe-mit-Weiterleitung" Nachricht, von der Nutzereinrichtung (10) empfangen wird, und bei dem die Aufhebung der CSFB Prozedur durchgeführt wird, nachdem die Antwortnachricht zum Durchführen der CSFB Prozedur von der Nutzereinrichtung empfangen worden ist, und bei dem, nachdem die Aufhebung der CSFB Prozedur initiiert worden ist, die Nutzereinrichtung die Weiterleitung von dem Quellnetz an das Zielnetz verhindert, wobei das Verfahren durch die Nutzereinrichtung (10) erzeugt wird und wobei das Verfahren **dadurch gekennzeichnet ist, dass**, nachdem die Aufhebung der CSFB Prozedur initiiert worden ist, die Nutzereinrichtung (10) die Übertragung einer Benachrichtigung über die Aufhebung von der Nutzereinrichtung an das Quellenetz unterdrückt.

5. Das Verfahren nach Anspruch 4, bei dem als eine Antwortnachricht eine "RRC Verbindungsfreigabe-mit-Weiterleitung" Nachricht von dem Quellnetz durch die Nutzereinrichtung (10) empfangen wird, dass die Nutzereinrichtung (10) die RCC Verbindung freigibt und dass die Nutzereinrichtung (10) die Durchführung der Weiterleitung von dem Quellnetz zu dem Zielnetz verhindert.

6. Das Ve4fahren nach Anspruch 4 oder 5, bei dem, nachdem eine Antwortnachricht (33) zum Weiterleiten des Quellnetzes zum Zielnetz, insbesondere eine "RCC Verbindungsfreigabe-mit-Weiterleitung" Nachricht, von dem Quellnetz durch die Nutzerienrichtung (10) empfangen worden ist, ein Handover-Kommando von der Nutzereinrichtung empfangen wird und dass die Aufhebung der CSFB Prozedur durchgeführt wird, nachdem das Handover-Kommando durch die Nutzereinrichtung (10) empfangen worden ist.

7. Das Verfahren nach einem der Ansprüche 4 bis 6, bei dem zur Aufhebung der CSFM Prozedur eine zweite Nachricht von der Nutzereinrichtung (10) an das Zielnetz gesendet wird, wobei die zweite Nachricht einen neuen Ursache-Wert aufweist, wobei der neue Ursache-Wert die Aufhebung der CSFB Prozedur charakterisiert.

8. Das Verfahren nach Anspruch 7, bei dem als eine zweite Nachricht eine "RCC Verbindungs-Wiederherstellungs-Anfrage" Nachricht von der Nutzereinrichtung (10) an das Quellnetz gesendet wird, wobei die "RCC Verbindungs-Wiederherstellungs-Anfrage" Nachricht einen neuen Ursache-Wert aufweist, wobei der neue Ursache-Wert die Aufhebung der CSFB Prozedur charakterisiert.

9. Das Verfahren nach Anspruch 7 oder 8, bei dem das Quellnetz einen eNodeB aufweist, dass zum Aufheben der CSFB Prozedur die Nutzereinrichtung (10) die zweite Nachricht an den eNodeB überträgt und dass die zweite Nachricht den eNodeB triggert, um eine Nachricht, die die Aufhebung der CSFB Prozedur charakterisiert, an das Zielnetz zu schicken.

10. Das Verfahren nach einem der Ansprüche 1 bis 9, bei dem das Verfahren ausgebildet ist, um eine Circuit-Switched-Fallback, CSFB, Prozedur von einem Quellnetz zu einem Zielnetz aufzuheben.

11. Das Verfahren nach einem der Ansprüche 1 bis 10, bei dem das Verfahren ausgebildet ist, um eine Circuit-Switched-Fallback, CSFB, Prozedur von E-UTRAN zu GERAN oder UTRAN aufzuheben.

## Revendications

1. Procédé d'annulation d'une procédure de retour à la commutation de circuit, CSFB, pour un équipement d'utilisateur (10) dans lequel un premier message (30) destiné à initier une procédure de retour CSFB est envoyé à partir de l'équipement d'utilisateur (10) à un réseau source et dans lequel l'annulation de la procédure de retour CSFB est mise en oeuvre après que le premier message destiné à initier la procédure de retour CSFB a été envoyé,
le procédé étant initié par l'équipement d'utilisateur (10), et le procédé étant **caractérisé en ce que**, après que l'annulation de la procédure de retour CSFB a été initiée, l'équipement d'utilisateur (10) envoie un second message au réseau source au moyen de la mise en oeuvre d'une procédure de mise à jour de zone de localisation, ledit second message comprenant une nouvelle valeur de cause, ladite nouvelle valeur de cause caractérisant l'annulation de la procédure de retour CSFB.

2. Procédé selon la revendication 1, dans lequel le réseau source comprend une entité de gestion de mobilité, MME, (12) et le second message est envoyée à ladite entité MME (12).

3. Procédé selon l'une quelconque des revendications 1 ou 2, dans lequel le réseau source comprend un noeud "eNodeB" (11) et le second message est envoyé audit noeud "eNodeB" (11).

4. Procédé d'annulation d'une procédure de retour à la commutation de circuit, CSFB, pour un équipement d'utilisateur (10), dans lequel un premier message (30), destiné à initier une procédure de retour CSFB, est envoyé à partir de l'équipement d'utilisateur (10) à un réseau source, dans lequel un message de réponse (33), destiné à rediriger le réseau source vers un réseau cible, en particulier un message "de libération de liaison RRC avec redirection", est reçu par l'équipement d'utilisateur (10), et dans lequel l'annulation de la procédure de retour CSFB est mise en oeuvre après que le message de réponse destiné à exécuter la procédure de retour CSFB a été reçu par l'équipement d'utilisateur, et dans lequel après que l'annulation de la procédure de retour CSFB a été initiée, l'équipement d'utilisateur empêche la redirection à partir du réseau source vers le réseau cible, le procédé étant initié par l'équipement d'utilisateur (10), et le procédé étant **caractérisé en ce que**, après que l'annulation de la procédure de retour CSFB a été initiée, l'équipement d'utilisateur (10) supprime la transmission d'une notification de l'annulation à partir de l'équipement d'utilisateur (10) vers le réseau source.

5. Procédé selon la revendication 4, dans lequel, en tant que message de réponse (33), un message "de libération de liaison RRC avec redirection" à partir du réseau source est reçu par l'équipement d'utilisateur (10), l'équipement d'utilisateur (10) libère la liaison RRC et l'équipement d'utilisateur (10) empêche l'exécution de la redirection depuis le réseau source vers le réseau cible.

6. Procédé selon la revendication 4 ou 5, dans lequel, après qu'un message de réponse (33) destiné à réorienter le réseau source vers le réseau cible, en particulier, un message "de libération de liaison RRC avec redirection" à partir du réseau source est reçu par l'équipement d'utilisateur (10), une instruction de transfert est reçue par l'équipement d'utilisateur, et l'annulation de la procédure de retour CSFB est mise en oeuvre après que l'instruction de transfert a été reçue par l'équipement d'utilisateur (10).

7. Procédé selon l'une quelconque des revendications 4 à 6, dans lequel, pour l'annulation de la procédure de retour CSFB, un second message est envoyé à partir de l'équipement d'utilisateur (10) vers le réseau source, ledit second message comprenant une nouvelle valeur de cause, ladite valeur de cause caractérisant l'annulation de la procédure de retour CSFB.

8. Procédé selon la revendication 7, dans lequel, en tant que second message, un message "de demande de rétablissement de liaison RRC" est envoyé à partir de l'équipement d'utilisateur (10) vers le réseau source, ledit message "de demande de rétablissement de liaison RRC" comprenant une nouvelle valeur de cause, ladite valeur de cause caractérisant l'annulation de la procédure de retour CSFB.

9. Procédé selon la revendication 7 ou 8, dans lequel le réseau source comprend un noeud "eNodeB", pour assurer l'annulation de la procédure de retour CSFB, l'équipement d'utilisateur (10) transmet le second message au noeud "eNodeB", et le second message déclenche l'envoi par le noeud "eNodeB" d'un message caractérisant l'annulation de la procédure de retour CSFB au réseau cible.

10. Procédé selon l'une quelconque des revendications 1 à 9, dans lequel le procédé est adapté de manière à annuler une procédure de retour à la commutation de circuit, CSFB, à partir d'un réseau source vers un réseau cible.

11. Procédé selon l'une quelconque des revendications 1 à 10, dans lequel le procédé est adapté de manière à annuler une procédure de retour à la commutation de circuit, CSFB, à partir d'un réseau E-UTRAN vers un réseau GERAN ou UTRAN.
